**Europäisches Patentamt**

**European Patent Office**

**Office européen des brevets**

(11) Publication number: **0 174 418**
**B1**

# (12) EUROPEAN PATENT SPECIFICATION

(45) Date of publication of patent specification: **23.05.90**

(51) Int. Cl.⁵: **C 22 C 38/04,** C 22 C 38/38

(21) Application number: **85100180.0**

(22) Date of filing: **10.01.85**

(54) Austenitic alloys based on iron-manganese and iron-manganese-chromium.

(30) Priority: **22.05.84 US 612771**

(43) Date of publication of application:
**19.03.86 Bulletin 86/12**

(45) Publication of the grant of the patent:
**23.05.90 Bulletin 90/21**

(84) Designated Contracting States:
**BE DE FR GB IT NL SE**

(56) References cited:
**FR-A-2 471 420**
**US-A-3 556 777**
**US-A-4 028 098**
**US-A-4 039 328**

(73) Proprietor: **WESTINGHOUSE ELECTRIC
CORPORATION
Westinghouse Building Gateway Center
Pittsburgh Pennsylvania 15222 (US)**

(72) Inventor: **Brager, Howard Roy
1617 Hunt
Richland Washington (US)**
Inventor: **Garner, Francis Albert
2003 Howell Avenue
Richland Washington (US)**

(74) Representative: **Fleuchaus, Leo, Dipl.-Ing. et al
Fleuchaus & Wehser Melchiorstrasse 42
D-8000 München 71 (DE)**

Courier Press, Leamington Spa, England.

# EP 0 174 418 B1

## Description

This invention relates to manganese-iron base and manganese-chromium-iron base austenitic alloys. It is especially concerned with those alloys having resistance to neutron irradiation induced swelling and low post irradiation residual radioactivity (i.e. low activation).

Over the years, a number of austenitic, nickel-chromium-iron base, alloys and ferritic, chromium-iron base, alloys have been studied and developed for use in the high temperature, high energy neutron (0.1 MeV to 1.0 MeV) environment encountered in a liquid metal fast breeder reactor (LMFBR)—a fission reactor. One of the prime objectives of the LMFBR alloy development program has been to develop alloys, which are swelling resistant and have the required irradiation mechanical properties for use as fuel cladding and/or use as ducts. The fuel cladding will see service in contact with flowing liquid sodium and have a surface temperature of about 400°C (~750°F) to 650°C (~1200°F). A duct surrounds each bundle of fuel pins and sees service at about 380°C (~715°F) to 550°C (~1020°F). These components will be exposed at the aforementioned elevated temperatures to neutron fluxes on the order of $10^{15}$ n/cm$^2$ · s (E>0.1 MeV), and should be capable of performing adequately to fluences on the order of 2 to $3 \times 10^{23}$ n/cm$^2$ (E>0.1 MeV).

The Fe-Ni-Cr austenitic alloys being evaluated include the austenitic stainless steels described in U.S. Patent Nos. 4,158,606; 4,407,673; and 4,421,572. In addition, Fe-Ni-Cr austenitic superalloys are being evaluated and have included those described in U.S. Patent Nos. 4,040,876; 4,129,462; 4,172,742; 4,225,364; 4,359,349; 4,355,350; 4,377,553; and U.S. Patent Application Serial No. 370,438 filed April 21, 1982.

The foregoing efforts have been aimed at providing materials for the LMFBR environment. The fusion reactor, or CTR (Controlled Thermonuclear Reactor), also requires development of structural materials for use in its neutron irradiation environment. While a large number of, differing, fusion reactor designs have been proposed, a common requirement is the need for a low swelling, low activation material having good irradiation mechanical properties for use as a "first wall" material. The first wall forms a vacuum chamber which will hold the hot (up to $10^{8°}$ K in its interior) plasma in which the fusion reaction takes place. The plasma side of the first wall may be coated with a protective material such as graphite or silicon carbide. The opposite side of the first wall may be in contact with a fluid medium such as helium, water, liquid lithium or a liquid lithium-lead alloy, for example. Examples of some of the Fusion Reactor designs, and first wall materials being considered, are provided in J. T. Adrian Roberts, "Structural Materials in Nuclear Power Systems" (published in 1981 by Plenum Press New York) at pages 1—12, 279—319.

As in the LMFBR, the environment in which the fusion reactor first wall material will operate is an elevated temperature neutron irradiation environment. However, this fusion environment will significantly differ from the LMFBR environment in that the energy of the source neutrons from a D-T (deuterium-tritium) fusion reaction is expected to be on the order of about 14 MeV compared to the 0.1 to 1.0 MeV neutrons produced in the LMFBR fission process. This difference is important in that some of the critical alloying elements in the previously discussed austenitic alloys have (n,p) and (n,α) transmutation reactions which are activated by neutrons having energies greater than about 10 MeV, producing radioactive products with long half-lives. This leads to a nuclear waste handling and long term storage problem.

A goal of the fusion reactor first wall alloy development program is to select or develop an alloy which will not only have the needed swelling resistance and mechanical properties, but will also have relatively low residual radioactivity (i.e. "low activation") allowing relatively short burial times (e.g. 80 to 100 yrs.) prior to reprocessing of the material. To meet this low activation goal, significant restrictions on the amount of the following elements in first wall materials have been proposed: Niobium<3 ppm; Mo<30 ppm; Cu<0.1 wt.%; N<0.3 wt.%; and Ni<0.9 wt.%. The restriction on nickel, and in most cases molybdenum, would eliminate the aforementioned austenitic Ni-Cr-Fe base alloys, developed for the LMFBR, from consideration as first wall materials. Other elements which may require significant restriction are: Ag, Bi, Tb, Ir, Eu and Ba.

Since 1882, when the first austenitic manganese steel was developed by Sir Robert Hadfield, a number of additional austenitic manganese steels have been developed. For the most part, these steels have high toughness, high ductility, a high work hardening coefficient, and good abrasion resistance. Typically, these alloys have been used in commercial applications requiring high toughness and high wear resistance. Some of the nominal commercial compositions, processing, and uses of austenitic manganese steel are listed in: R. B. Ross, "Metallic Materials Specification Handbook", (1980, E. & F. N. Spon Ltd.) at pages 369, 370, 579—582; and ASM (American Society for Metals), "Metals Handbook Ninth Edition, Volume 3—Properties and Selection: Stainless Steels, Tool Materials and Special Purpose Metals" (1980, ASM), at pages 568 to 588.

From US-Patent No. 4,028,098 it is known to fabricate tubes or pipes, which are operated at very low temperatures, from a steel consisting of 20% to 30% Mn, 5% to 12% Cr and non-zero quantities of up to about 0.5% C, up to 1.5% Si and up to 0.5% V. Pipes consisting of this composition have very little changes in length dimensions due to a relatively small coefficient of thermal expansion.

An aim of the present invention is to provide alloy compositions having a combination of good neutron irradiation swelling resistance and low activation rendering the alloys suitable for use in neutron irradiation environments, such as those encountered in the LMFBR and the CTR.

Accordingly, the present invention resides in an alloy having an austenitic microstructure and

2

characterized by consisting of from 20 to 40 wt.% Mn; 0 to 15 wt.% Cr; from 0.4 to 3.0 wt.% Si; at least one of C between 0 to 0.7 wt.% C and between 0 to 0.3 wt.% N in an amount effective to stabilize said austenitic microstructure; 0.03 to 0.06 wt.% P; 0.003 to 0.006 wt.% B; 0 to 3.0 wt.% Al; 0 to 0.5 wt.% Ni; 0 to 2.0 wt.% W; 0 to 1.0 wt.% Ti; 0 to 1.0 wt.% Ta; 0 to 2.5 wt.% V, wherein at least one of W, Ta and Ti is present in an amount of at least 0.2 wt.% as a metal carbide forming agent with the balance being iron and unavoidable impurities.

Al may be added in amounts effective to enhance liquid metal corrosion resistance an/or strength, but not more than 3 wt.% to avoid increases in activation.

Preferably the Mn content of the alloy is from 25 to 40 wt.% and more preferably from 25 to 35 wt.%, with a nominal composition of about 30 wt.% being most preferred.

The chromium content of the alloy is preferably from 2 to 15 wt.% and more preferably from 5 to 10 wt.%.

Preferably, nitrogen is limited to less than 0.1 wt.%.

Silicon is preferably present at from 0.4 to 0.8 wt.% of the alloy.

Preferably, the strengthening agent is selected from 0.03 to 0.06 wt.% P, from 0.5 to 1.5 wt.% W, from 0.2 to 0.5 wt.% Ti, from 0.2 to 0.5 wt.% Ta, alone or in combination with each other.

Preferably the following are considered as incidental impurities, with their concentrations limited to achieve a low activation alloy: Nb, Mo, Cu, Ni, Ag, Bi, Tb, Ir, Eu and Ba.

While not wishing to be bound by theory, we believe that the understanding of, use of, and the advantageous results which may be obtained from the present invention, may be furthered by the following theory:

Upon studying the compositional dependence of high-energy neutron irradiation induced swelling in Fe-Ni-Cr ternary alloys, we have shown that the compositional dependence observed resides primarily in the transient region (i.e. incubation period) of swelling and that the greatest resistance to swelling occurs in the compositional range when nickel content is from 35 to 45 wt.% and the chromium content is less than 15 wt.%. This compositional range is also characterized by anomalous property behavior where many physical properties such as thermal expansion, elastic moduli, lattice parameter and excess free energy exhibit a marked variation with composition. This anomalous behavior is best exmplified by the Invar phenomenon, wherein the thermal coefficient of expansion reaches a minimum near Fe—35 wt.% Ni. At another composition, Fe—7.8 wt.% Cr—35 wt.% Ni, the thermoelastic coefficient indeed becomes zero over a significant temperature range. This composition is known as Elinvar and fortuitously corresponds almost exactly with the composition of one of the most swelling-resistant ternary alloys irradiated in the range of 400 to 650°C. This ternary alloy has the composition Fe—7.5 wt.% Cr—35.5 wt.% Ni.

Perhaps it is only coincidental that the Invar, and particularly the Elinvar, composition correspond to the region where the duration of the transient regime of Fe-Ni-Cr austenitic alloys appears to be the longest. However, if one evaluates the current theories of void swelling, it appears that parameters such as lattice parameters and elastic moduli indeed are important determinants of swelling behavior, particularly when radiation-induced segregation occurs at void surfaces. Accordingly, we suggest that a direct connection may exist between the anomalous behavior compositional range and the composition range of maximum swelling resistance.

We have found through review of the available literature that there exists iron-manganese base and iron-chromium-manganese base Invar-like alloys. Therefore, based on the correlation observed in the Fe-Ni and Fe-Cr-Ni systems between Invar-like properties and increased swelling resistance, it is our belief that Fe-Mn and Fe-Cr-Mn alloys having Invar behavior will also have increased swelling resistance. The Invar behavior has been observed in Fe-Mn and Fe-Mn-Cr alloys at similar iron and chromium levels and at levels of Mn comparable to those of Ni in the Fe-Ni and Fe-Ni-Cr Invar type alloys. Based on our review of the available literature we believe that the Invar phenomenon resides at Mn levels on the order of 30 weight percent.

An additional advantage of the Fe-Mn and Fe-Mn-Cr alloys based on the Invar/swelling resistance correlation is a substantial reduction in residual radioactivity after fusion reactor first wall usage compared to the LMFBR Fe-Ni-Cr austenitic alloys.

We further believe it to be desirable that our alloy be substantially austenitic and preferably completely austenitic. To this end, an austenite stabilizer is added. This austenite stabilizing element is selected from C and N, alone or in combination with each other, and in an amount effective to stabilize the austenite phase, but less than 0.7 wt.% C and less than 0.3 wt.% N. The minimum amount of carbon and/or nitrogen needed for a particular alloy may be roughly estimated by referral to a Schaeffler diagram which estimates the microstructural conditions (e.g. amount of austenite, ferrite and martensite) produced by welding as a function of equivalent nickel content and equivalent chromium content. Equivalent nickel content is defined as the wt.% Ni+0.5×wt.% Mn+30×wt.% C+30×wt.% N. Equivalent chromium content is defined as the wt.% Cr+1.5×wt.% Si. While the Schaeffler diagram was developed for Fe-Ni-Cr base austenitic stainless steels, we believe that it can be used to provide a rough estimate of the C+N contents required in the present invention. More accurate assessments may be made through routine experimentation. The Schaeffler Diagram is shown in A. L. Schaeffler, "Metal Progress 56," (1949) at page 680B.

While both carbon and nitrogen may be added in the amounts described, it is however preferred for low activation alloys that the nitrogen content be less than 0.1 wt.%.

For high temperature applications such as LMFBR fuel cladding and ducts, and fusion first wall applications, the alloys according to the present invention preferably include a strengthening agent selected to provide enhanced elevated temperature tensile and creep properties. This strengthening agent may be selected from 0.01 to 0.1 wt.% P, 0.2 to 2.5 wt.% V, 0.2 to 2.0 wt.% W, and 0.1 to 1.0 wt.% Ti, and 0.1 to 1.0 wt.% Ta, alone or in combination with each other. It is believed that phosphorous will not only strengthen the alloy through phosphide precipitation, but will also act to enhance swelling resistance. However, excessive amounts of phosphorous may be deleterious from a weldability standpoint. For these reasons the phosphorous content is held to 0.03 to 0.06 wt.%, and more preferably 0.03 to 0.05 wt.%.

Tungsten is believed to strengthen the alloy through a solid solution strengthen mechanism and metal carbide precipitation. When present, this element should be preferably held to from 0.5 to 1.5 wt.% to assure the fabricability of the alloy by conventional metal working techniques.

Titanium and tantalum are very strong formers of carbide precipitates and may be used in that function here to improve ductility and creep properties as well as strength. Titanium and tantalum are preferably held to from 0.2 to 0.5 wt.%.

Vanadium's preference during irradiation is being evaluated since it forms massive V(C,N) particles during thermal aging, rather than the dispersion of fine precipitates desired for good mechanical properties.

Also boron is present in the alloy at 0.03—0.06 wt.% to improve ductility. It is preferred that boron be added in conjunction with the preferred range of phosphorous (0.03 to 0.06 wt.%) to improve creep and stress rupture properties.

Aluminum may be added to the present alloys to provide improved corrosion resistance, and may be particularly necessary for applications involving contact with liquid metals, such as, lithium and lithium-lead alloys. When added, aluminum should be limited to not more than 3 wt.% to minimize handling and storage problems due to residual radioactivity. For this reason, it is preferred that the aluminum content of our alloys be from 0.5 to 2.0 wt.% where enhanced liquid metal corrosion resistance is required.

Nickel may be deliberately added at levels up to 0.5 wt.%, to provide enhanced austenite stability and improved ductility. Levels above 0.5 wt.%, should be avoided in order to minimize handling and storage problems due to residual radioactivity. Most preferably nickel is not intentionally added, but is present only as an incidental impurity.

Iron forms essentially the balance of these alloys. In applications having the potential of producing significant amounts of residual radioactivity, the following elements preferably, should at most be present at incidental impurity levels: Nb, Mo, Cu, N, Ni, Ag, Bi, Tb, Ir, Eu, and Ba. The tolerable levels will depend on the specific environment of use, the particular alloy composition, as well as the relevant regulations specifying the maximum level of radioactivity permitted for safe handling after a predetermined burial period.

The invention will now be illustrated with reference to the following Example:

Example

Alloys having the nominal melt composition aiming points shown in Table I were arc melted in a purified argon atmosphere with a non-consumable tungsten electrode. The starting materials used were basically electrolytic, high purity, virgin materials. Buttons of about 175 grams and about $\frac{1}{4}$"×1"×3" in size, were melted in water cooled copper molds. It is contemplated, that in the future the foregoing starting materials and melting technique may be replaced by higher purity starting materials, such as zone refined materials, and melting techniques allowing better control of incidental impurities.

### TABLE I
Nominal alloy compositions (wt.%)*

| Alloy | Mn | Cr | C | N | V | P | B | Al | W | Ni | Si | Ti | Ta |
|-------|----|----|------|------|---|------|-------|-----|---|-----|-----|-----|-----|
| X75   | 30 | 2  | 0.1  | 0.15 | — | —    | —     | —   | — | 0.5 | 0.4 | —   | —   |
| R76   | 30 | 2  | 0.6  | 0.05 | — | 0.05 | 0.005 | —   | — | 0.5 | 0.4 | —   | —   |
| R77   | 30 | 2  | 0.4  | 0.15 | 1 | 0.05 | 0.005 | —   | 1 | 0.5 | 0.4 | —   | —   |
| R78   | 30 | 5  | 0.05 | 0.15 | — | —    | —     | —   | — | 0.5 | 0.4 | —   | —   |
| R79   | 30 | 10 | 0.05 | 0.1  | — | —    | —     | —   | — | 0.5 | 0.4 | —   | —   |
| R80   | 30 | 10 | 0.5  | 0.1  | 2 | —    | 0.005 | 1   | 2 | 0.5 | 0.4 | —   | —   |
| R81   | 20 | 15 | 0.05 | 0.1  | — | —    | —     | —   | — | 0.5 | 0.4 | —   | —   |
| R129  | 30 | 5  | 0.5  | 0.1  | — | 0.05 | 0.005 | 1   | — | —   | 0.4 | —   | —   |
| R130  | 30 | 5  | 0.5  | 0.1  | — | 0.05 | 0.005 | 1.  | — | —   | 0.4 | 0.2 | —   |
| R132  | 30 | 5  | 0.5  | 0.1  | — | 0.05 | 0.005 | 1   | 1 | —   | 0.4 | —   | —   |
| R133  | 30 | 5  | 0.5  | —    | — | —    | 0.005 | —   | — | —   | 0.8 | —   | —   |
| R134  | 30 | 5  | 0.5  | 0.1  | — | 0.05 | 0.005 | 1   | — | —   | 0.4 | —   | 0.2 |

Only samples R77, R130, R132 and R134 fall under the Scope of the claimed alloy.
*Balance essentially iron.

All alloys in Table I were then given a homogenization heat treatment in an inert gas for about two hours at about 1250°C. These alloys were then reheated in an inert gas to about 1000°C and immediately thereafter given about a 50% reduction in thickness by rolling, followed by solution annealing in an inert gas at about 1030°C for about ½ hour. Subsequently, these alloys were cold rolled for 3 to 4 additional reductions in thickness of about 40 to about 60 percent each, separated by intermediate solution anneals in an inert gas at about 1030°C for about ½ hour. Each 40 to 60 percent cold reduction was typically accomplished in 2 to 4 cold rolling passes.

The wrought samples of the alloys in the various metallurgical conditions shown in Table II were prepared from sheet having a thickness of about 0.25 mm. TEM (transmission electron microscopy) disks from all alloys shown in Table II and miniature tensile samples from alloy R77 were placed in the FFTF (Fast Flux Test Facility at Hanford Washington) reactor for fast neutron (0.1<E<1.0 MeV) irradiation exposure at about 400, 500 and 600°C.

### TABLE II
Metallurgical condition

| S.A.*+C.W.* | S.A. | S.A.+C.W.+A* | S.A.+C.W.+A$_1$*+A$_2$* |
|-------------|------|--------------|--------------------------|
| X75, R76—R81 | R77 | X75, R77, R80 | R77 |

*S.A.=solution annealed at 1030°C for ½ hour
C.W.=20% cold rolling reduction
A=aging treatment at 650°C for 1 hour
A$_1$+A$_2$=aging treatment at 600°C for 1 hour followed by an aging treatment at 700°C for 10 hours
Only sample R77 falls under the scope of the claimed alloy.
All heat treatments were performed in an inert atmosphere.

## Claims

1. An alloy having an austenitic microstructure and characterized by consisting of from 20 to 40 wt.% Mn; 0 to 15 wt.% Cr; from 0.4 to 3.0 wt.% Si; at least one of C between 0 to 0.7 wt.% C and N between 0 to 0.3 wt.% N in an amount effective to stabilize said austenitic microstructure; 0.03 to 0.06 wt.% P; 0.003 to 0.006 wt.% B; 0 to 3.0 wt.% Al; 0 to 0.5 wt.% Ni; 0 to 2.0 wt.% W; 0 to 1.0 wt.% Ti; 0 to 1.0 wt.% Ta; 0 to 2.5 wt.% V, wherein at least one of W, Ta and Ti is present in an amount of at least 0.2 wt.% as a metal carbide forming agent with the balance being iron and unavoidable impurities.

2. An alloy according to claim 1, characterized in that said alloy contains from 25 to 35 wt.% Mn.

3. An alloy according to claim 1 or 2, characterized in that said alloy contains from 5 to 10 wt.% Cr.

4. An alloy according to claim 1, 2 or 3, characterized in that said alloy contains less than 0.1 wt.% N.

5. An alloy according to claim 1, 2, 3 or 4, characterized in that said alloy contains from 25 to 40 wt.% Mn.

**Patentansprüche**

1. Legierung mit einer austenitischen Mikrostruktur, dadurch gekennzeichnet, daß sie besteht aus 20 bis 40 Gew.-% Mn, 0 bis 15 Gew.-% Cr, 0,4 bis 3,0 Gew.-% Si, zumindest einem der Stoffe C und N, wobei C zwischen 0 bis 0,7 Gew.-% und N zwischen 0 und 0,3 Gew.-% liegt und in einer Menge wirksam ist, um die austenitische Mikrostruktur zu stabilisieren; 0,03 bis 0,06 Gew.-% P, 0,003 bis 0,006 Gew.-% B, 0 bis 3,0 Gew.-% Al; 0 bis 0,5 Gew.-% Ni; 0 bis 2,0 Gew.-% W; 0 bis 1,0 Gew.-% Ti; 0 bis 1,0 Gew.-% Ta; 0 bis 2,5 Gew.-% V, wobei zumindest einer der Stoffe W, Ta und Ti in einer Menge von zumindest 0,2 Gew.-% als Metallcarbid formendes Agens zusammen mit Eisen und unvermeidbaren Verunreinigungen vorhanden ist.

2. Legierung nach Anspruch 1, dadurch gekennzeichnet, daß die Legierung 25 bis 35 Gew.-% Mn enthält.

3. Legierung nach Anspruch 1 oder 2, dadurch gekennzeichnet, daß die Legierung 5 bis 10 Gew.-% Cr enthält.

4. Legierung nach Anspruch 1, 2 oder 3, dadurch gekennzeichnet, daß die Legierung weniger als 0,1 Gew.-% N enthält.

5. Legierung nach Anspruch 1, 2, 3 oder 4, dadurch gekennzeichnet, daß die Legierung 25 bis 40 Gew.-% Mn enthält.

**Revendications**

1. Alliage possédant une microstructure austénitique et caractérisé en ce qu'il est constitué de 20 à 40% en poids de Mn, 0 à 15% en poids de Cr, 0,4 à 3,0% en poids de Si, d'au moins l'un de C, entre 0 et 0,7% en poids, et N, entre 0 et 0,3% en poids, en une quantité efficace pour stabiliser ladite microstructure austénitique, de 0,03 à 0,06% en poids de P, 0,003 à 0,006% en poids de B, 0 à 3,0% en poids d'Al, 0 à 0,5% en poids de Ni, 0 à 2,0% en poids de W, 0 à 1,0% en poids de Ti, 0 à 1,0% en poids de Ta, 0 à 2,5% en poids de V, dans lequel au moins l'un des W, Ta et Ti est présent en une quantité d'au moins 0,2% en poids sous forme d'agent de formation de carbure métallique, le complément consistant en fer et en impuretés inévitables.

2. Alliage selon la revendication 1, caractérisé en ce que ledit alliage contient entre 25 et 35% en poids de Mn.

3. Alliage selon la revendication 1 ou 2, caractérisé en ce que ledit alliage contient entre 5 et 10% en poids de Cr.

4. Alliage selon la revendication 1, 2 ou 3, caractérisé en ce que ledit alliage contient moins de 0,1% en poids de N.

5. Alliage selon la revendication 1, 2, 3 ou 4, caractérisé en ce que ledit alliage contient entre 25 et 40% en poids de Mn.